# EUROPÄISCHE PATENTANMELDUNG

(11) **EP 0 600 401 A1**
(43) Veröffentlichungstag der Anmeldung: **08.06.1994**
(21) Anmeldenummer: 93119156.3
(22) Anmeldetag: 27.11.1993
(51) Int. Cl.: H04M 3/38, H04M 3/42

(54) **Verfahren zum Aufbau einer Fernsprechverbindung in einem digitalen Fernmeldenetz**

(30) Priorität: 02.12.1992 DE 4240479
(71) Anmelder: Alcatel SEL Aktiengesellschaft, D-70435 Stuttgart (DE); ALCATEL N.V., NL-1077 XX Amsterdam (NL)
(72) Erfinder: Horrer, Matthias, D-71696 Möglingen (DE)
(74) Vertreter: Pohl, Herbert, Dipl.-Ing

(57) **Zusammenfassung**

In diesen Fernmeldenetzen sind Dienstmerkmale bekannt, die die Freizügigkeit beim Verbindungsaufbau einschränken. So kann ein Teilnehmer seinen Anschluß gegen ankommende Anrufe generell sperren. Oder der Ruf wird nur zugestellt, wenn der rufende Teilnehmer in einer Teilnehmerliste eingetragen ist. Bei einem erweiterten Dienstmerkmal kann ein Teilnehmer durch ein geheimes Paßwort Zugang zu dem gewünschten Teilnehmer bekommen. Der rufende Teilnehmer hat allgemein keine Möglichkeit, von sich aus diese Einschränkungen zu umgehen. Durch das erfindungsgemäße Verfahren wird einerseits gewährleistet, daß der gerufene Teilnehmer sich vor ankommenden Rufen schützen kann und daß andererseits der rufende Teilnehmer die Einschränkung durch eine bekannte Prozedur aufheben kann, wenn der Verbindungswunsch sehr dringend ist. Damit wird jeder Teilnehmer prinzipiell, also beispielsweise auch in Notfällen, erreichbar.

## Beschreibung

Die Erfindung betrifft ein Verfahren zum Aufbau einer Fernsprechverbindung in einem diensteintegrierenden digitalen Fernmeldenetz, das eine Vielzahl von Teilnehmerdienstmerkmalen bietet.

Es ist allgemein bekannt, daß ein Teilnehmer seinen in einem solchen Fernmeldenetz betriebenen Anschluß gegen ankommende Anrufe sperren kann. Diese "Ruhe vor dem Telefon" erlaubt zwar jederzeit abgehende Verbindungen herzustellen, der Teilnehmer ist aber in diesem Fall von anderen Teilnehmern nicht erreichbar.

Bei einem anderen allgemein bekannten Verfahren kann der Teilnehmer eine Liste von Teilnehmeradressen in der zu seiner Vermittlungsstelle gehörenden Datenbank speichern und damit bewirken, daß ankommende Rufe nur dann durchgeschaltet werden, wenn der rufende Teilnehmer mit seiner Adresse in der Liste eingetragen ist. Dieses Dienstmerkmal kann dadurch erweitert werden, daß Teilnehmer, deren Adresse nicht in der Liste steht, über ein vorher vereinbartes Paßwort dennoch Zugang zu dem gewünschten Teilnehmer erhalten. Bei diesem Verfahren erreichen nur ausgewählte Anrufer den gewünschten Teilnehmer, die nicht durchgeschalteten Anrufe werden mit einer Ansage direkt abgelehnt oder auf einen anderen Anschluß, beispielsweise auf ein Sekretariat, umgelenkt. Der rufende Teilnehmer hat keine Möglichkeit, von sich aus diese Einschränkungen zu umgehen.

Der Erfindung liegt nun die Aufgabe zugrunde, ein Verfahren zum Aufbau einer Fernsprechverbindung anzugeben, mit dem einerseits Anrufe zum gerufenen Teilnehmer abgewiesen werden und andererseits jeder rufende Teilnehmer dennoch die Möglichkeit hat, mit einer bekannten Prozedur die Sperre für ankommende Anrufe aufzuheben.

Diese Aufgabe wird erfindungsgemäß durch die Merkmale des im Hauptanspruch beschriebenen Verfahrens gelöst.

Mit diesem Verfahren erhält der rufende Teilnehmer eine Entscheidungsmöglichkeit, den gerufenen Teilnehmer zu erreichen oder seine Ruhe vor dem Telefon zu akzeptieren. Der rufende Teilnehmer wird somit handlungsfähig und kann bei einem abgewiesenen Gesprächswunsch aktiv werden, wenn er dennoch den angerufenen Teilnehmer, beispielsweise in Notfällen, sprechen möchte.

Obwohl das Verfahren vorteilhafterweise in digitalen Fernmeldenetzen einsetzbar ist, ist es jedoch auch möglich, derartige Dienstmerkmale in analogen Netzen nachzurüsten. Das erfindungsgemäße Verfahren kann auch in Funktelefonnetzen angewendet werden, wenn beispielsweise ein Autofahrer während der Fahrt nicht durch Telefonanrufe abgelenkt werden möchte.

Die Erfindung wird nachstehend an einem Ausführungsbeispiel erläutert. In der dazugehörigen Zeichnung zeigen:
- Fig. 1: ein Ablaufdiagramm für das erfindungsgemäße Verfahren und
- Fig. 2: ein Blockschaltbild mit der Darstellung ausgewählter Verfahrensschritte.

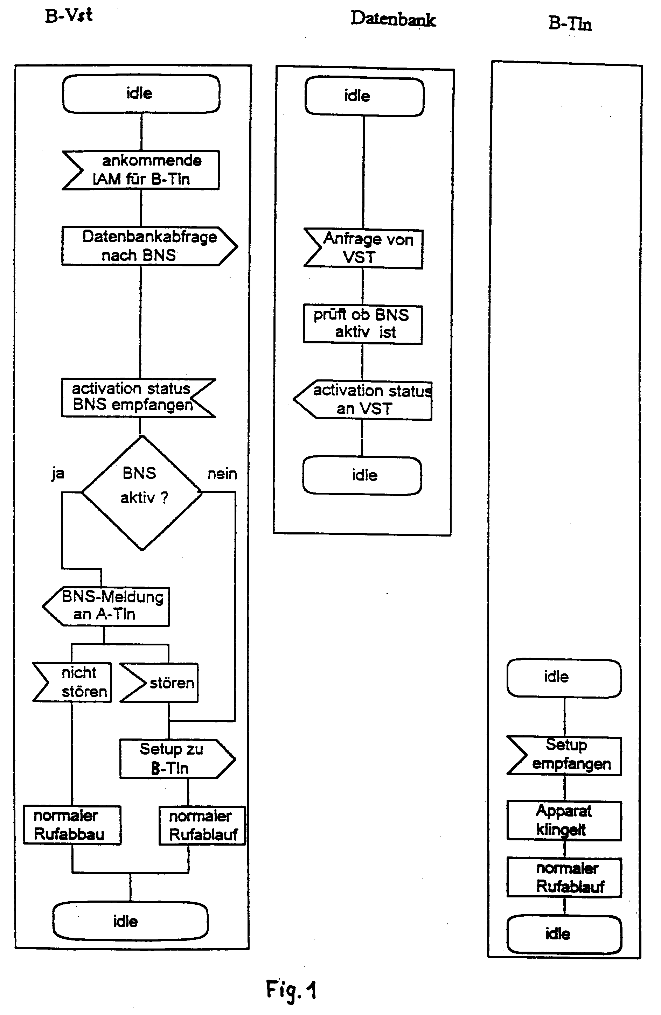

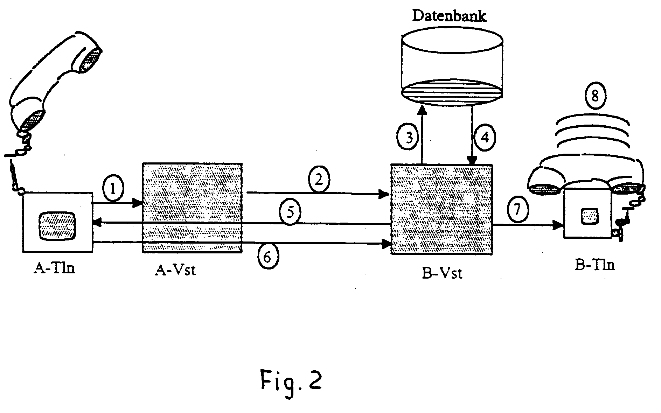

Gemäß der Fig. 1 und der Fig. 2 sind an dem Verfahren im wesentlichen beteiligt der rufende Teilnehmer A-Tln kurz A-Teilnehmer, die Vermittlungsstelle A-Vst, an der der A-Teilnehmer angeschlossen ist, die Vermittlungsstelle B-Vst, an der der gerufene Teilnehmer B-Tln angeschlossen ist, der gerufene Teilnehmer B-Tln, kurz B-Teilnehmer, und eine der Vermittlungsstelle des B-Teilnehmers zugeordnete Datenbank.

Jeder Teilnehmer hat nun die Möglichkeit, das Dienstmerkmal BNS, abgeleitet aus "Bitte nicht stören!", zu aktivieren und in die seiner Vermittlungsstelle zugeordneten Datenbank die Zeiten, beispielsweise Tageszeiten, Wochentage, Feiertage, einzutragen, während denen er einen Anruf entgegennehmen will oder auch die Zeiten einzutragen, die für den Teilnehmer störungsfrei sein sollen.

Gemäß Fig. 1 ist nun bei der mit der Initial Address Message IAM beginnenden Rufaufbauprozedur vom rufenden A-Teilnehmer zu dem gerufenen B-Teilnehmer eine Datenbankabfrage vorzusehen, mit der festgestellt wird, ob von dem gewünschten Teilnehmer das Dienstmerkmal BNS aktiviert worden ist oder nicht. Ist das Dienstmerkmal BNS nicht aktiv, so erfolgt in üblicher Weise der Verbindungsaufbau.

Bei aktivem Dienstmerkmal BNS wird dem rufenden A-Teilnehmer beispielsweise durch eine Anzeige oder Ansage mitgeteilt, daß der gerufene B-Teilnehmer nicht gestört werden will. Akzeptiert der A-Teilnehmer den Wunsch des B-Teilnehmers, so legt er den Handapparat auf und der bis zu diesem Zeitpunkt erfolgte Rufaufbau wird in bekannter Weise abgebaut.

Stuft der A-Teilnehmer seinen Anruf als dringend ein, so hat er die Möglichkeit, durch eine vorgegebene Prozedur, beispielsweise durch eine Ziffernkombination, zu bewirken, daß der Aufbau der Verbindung zum B-Teilnehmer fortgesetzt wird und der B-Teilnehmer den Ruf empfängt. Dieser Ablauf, bei dem der A-Teilnehmer aktiv ist, ist in Fig. 2 dargestellt.
1. A-Teilnehmer wählt Rufnummer des B-Teilnehmers.
2. Rufaufbauprozedur von A-Vermittlungsstelle A-Vst zur B-Vermittungsstelle B-Vst.
3.-4. Abfrage der Datenbank, ob B-Teilnehmer das Dienstmerkmal BNS aktiviert hat.
5. A-Teilnehmer erhält Mitteilung, daß Dienstmerkmal BNS aktiviert ist.
6. A-Teilnehmer setzt sich über den Ruhewunsch des B-Teilnehmers hinweg, indem er der B-Vermittlungsstelle B-Vst eine Zusatzinformation übermittelt.
7. Verbindung zum B-Teilnehmer wird hergestellt.
8. B-Teilnehmer wird gerufen.

## Patentansprüche

1. Verfahren zum Aufbau einer Fernsprechverbindung in einem diensteintegrierenden digitalen Fernmeldenetz, bei dem der Verbindungswunsch von einem rufenden Teilnehmer (A-Tln) zu einem gerufenen Teilnehmer (B-Tln) durch Verträglichkeitsbedingungen, die in einer der Vermittlungsstelle (B-Vst) des gerufenen Teilnehmers (B-Tln) zugeordneten Datenbank vom gerufenen Teilnehmer (B-Tln) eingetragen werden, eingeschränkt wird,
**dadurch gekennzeichnet**, daß von dem gerufenen Teilnehmer (B-Tln) in die Datenbank seiner Vermittlungsstelle Zeitabschnitte eingetragen werden, während denen die Rufdurchschaltung an den gerufenen Teilnehmer (B-Tln) unterbunden wird, daß dem rufenden Teilnehmer (A-Tln) dieser Zustand bei einem Verbindungswunsch zum gerufenen Teilnehmer (B-Tln) signalisiert wird und daß bei dringenden Verbindungswunsch von dem rufenden Teilnehmer (A-Tln) über sein Endgerät mittels einer Eingabeprozedur die Rufdurchschaltung an den gerufenen Teilnehmer (B-Tln) veranlaßt und somit die Fernsprechverbindung hergestellt wird.

2. Verfahren nach Anspruch 1, dadurch gekennzeichnet, daß von dem gerufenen Teilnehmer (B-Tln) in die Datenbank ein Zeitmuster, beispielsweise Tageszeiten in Verbindung mit bestimmten Kalendertagen, eingetragen wird, das angibt, wann der Verbindungswunsch unterbunden beziehungsweise erlaubt werden soll.
